# EUROPÄISCHE PATENTSCHRIFT

(11) **EP 0 987 810 B1**
(45) Veröffentlichungstag und Bekanntmachung des Hinweises auf die Patenterteilung: **13.11.2002**
(21) Anmeldenummer: 99810822.9
(22) Anmeldetag: 14.09.1999
(51) Int. Cl.: H02J 13/00, H04B 3/56

(54) **Koppelkondensator mit integriertem Anschlusskabel**
Coupling capacitor with incorporated connecting cable
Condensateur de couplage avec câble de connexion intégré

(30) Priorität: 14.09.1998 DE 19841864
(43) Veröffentlichungstag der Anmeldung: 22.03.2000
(73) Patentinhaber: ABB Research Ltd., 8050 Zürich (CH)
(72) Erfinder: Lehmann, Josef, 79761 Waldshut (DE); Rhyner, Jakob Dr., 8006 Zürich (CH); Doser, Bernhard, 79761 Waldshut (DE); Postma, Ate, 79790 Küssaberg-Rheinheim (DE)
(74) Vertreter: ABB Patent Attorneys

(56) Entgegenhaltungen:
- DE-C- 19 510 659
- DE-C- 19 648 382
- FR-A- 2 685 562
- US-A- 3 771 069
- PATENT ABSTRACTS OF JAPAN vol. 1997, no. 2, 28. Februar 1997 (1997-02-28) & JP 08 264330 A (TAKAOKA ELECTRIC), 11. Oktober 1996 (1996-10-11)
- PATENT ABSTRACTS OF JAPAN vol. 5, no. 55 (E-52), 16. April 1981 (1981-04-16) & JP 56 007532 A (MITSUBISHI)

## Beschreibung

### TECHNISCHES GEBIET

Die vorliegende Erfindung betrifft das Gebiet der Kommunikation über Stromversorgungsnetze. Sie geht aus von einer Vorrichtung zur Signaleinkopplung in Stromleitungen nach dem Oberbegriff des Anspruchs 1.

### STAND DER TECHNIK

Die Verwendung bestehender Energieverteilungsnetze zur Datenkommunikation ist von grosser wirtschaftlicher Bedeutung. Elektrizitätsversorgungsunternehmen möchten ohne Neuinstallation von Leitungen beispielsweise Einrichtungen des Stromverteilungsnetzes abfragen und fernbedienen oder durch Fernabfragen und -steuerungen bei Endverbrauchern die Auslastung des Netzes optimieren.

In der deutschen Patentschrift DE 196 48 382 C1 werden ein Verfahren und eine Vorrichtung zur Signalübertragung über Stromversorgungsleitungen offengelegt, bei welchem Kommunikationssignale über die Phasenleiterschirme von Stromkabeln übertragen werden. Die Signale werden über induktive Koppler auf die Abschirmungen aufmoduliert. Offensichtlich ist dieses Verfahren nur bei Stromkabeln mit Abschirmungen anwendbar und für ungeschirmte Überlandleitungen ungeeignet. Im Weiteren wird die Schaltung einer Signalübertragungseinrichtung gezeigt, bei welcher die Ein- und/oder Auskopplung der Kommunikationssignale über einen Koppelkondensator zu mindestens einem Phasenleiter der Stromleitung erfolgt.

Der Anschluss des Koppelkondensators (KK) an einen Phasenleiter auf Mittel- oder Hochspannungsebene wird durch ein stromloses Anschlusskabel (AK) vermittelt. Die Verbindung zwischen AK und KK erfolgt normalerweise ausserhalb eines den KK umgebenden, geerdeten Gehäuses. Die mittel- oder hochspannungskompatible Durchführung durch dieses Gehäuse umfasst Mittel zur Feldabsteuerung zwecks Vermeidung von Feldüberhöhungen. Dazu geeignet ist beispielsweise eine feldsteuernde Schicht aus einem Material mit einer hohen Dielektrizitätskonstante, welche Schicht als Schlauch oder Band um den Stromleiter angeordnet ist (Kabelendverschluss). Eine in der WO 80/00762 offenbarte, kapazitive Feldsteuerung ist geeignet für Durchführungen durch geerdete Metallwände. Sie basiert auf einer Anzahl konzentrisch um den zentralen Leiter angeordneter leitender Metallfolien.

Die Verbindung des Anschlusskabels mit der Durchführung erfordert einen grossen Isolationsaufwand und Platzbedarf. Sie ist zudem in modernen Kompaktschaltanlagen aufgrund der zu geringen Isolationsabstände mit herkömmlichen Kabelendverschlüssen unmöglich. Als Ersatz sind Verbindungen mittels isolierter Hochspannungskoaxialstecker möglich, welche aber teuer und aufwendig in der Installation sind.

### DARSTELLUNG DER ERFINDUNG

Aufgabe der vorliegenden Erfindung ist es, eine kostengünstige, platzsparende und effiziente Vorrichtung zur kapazitiven Signaleinkopplung in eine Freiluftleitung oder ein Stromkabel eines Mittel- oder Hochspannungsnetzes anzugeben. Diese Aufgabe wird erfindungsgemäss durch die Merkmale des Anspruchs 1 gelöst.

Kern der Erfindung ist es, das eine Ende des isolierten Anschlusskabels direkt in ein den Koppelkondensator umschliessendes Gehäuse zu integrieren. Dadurch entfällt die oben genannte, isolationstechnisch aufwendige beziehungsweise teure Verbindung. Eine derartige Integration eines isolierten Mittel- oder Hochspannungskabels in ein geerdetes Gehäuse bedingt eine Feldsteuerung im Bereich der Durchführung, d.h. an der Stelle wo die Abschirmung des Kabels unterbrochen ist. In der vorliegenden Erfindung wird das elektrische Feld mittels einer speziellen Vorgabe der Form des Gehäuses abgesteuert. Eine geeignete Abrundung der erfindungsgemässen Ausformung der kabelseitigen Gehäusewand hat eine unkritische Feldverteilung zur Folge.

Zur Ausführung der Erfindung kann auf bekannte und bewährte Standardkomponenten (Koppelkondensatoren (KK) und Anschlusskabel (AK)) zurückgegriffen werden. Die aus KK und AK gebildete erfindungsgemässe Einheit ist kompakt und berührungssicher, wobei sich unter Verwendung von Trockenkondensatoren weitere Volumen- und Gewichteinsparungen erzielen lassen. Die zur Feldsteuerung vorgesehene Ausbildung des den KK umgebenden Gehäuses lässt sich mittels einer einfachen und kostengünstigen mechanischen Bearbeitung realisieren.

### KURZE BESCHREIBUNG DER ZEICHNUNG

Die Erfindung wird nachstehend anhand von Ausführungsbeispielen erläutert. Es zeigen schematisch:
- Fig. 1: eine Schalt- oder Transformatorenstation mit einer Koppeleinheit zur kapazitiven Signaleinkopplung in eine Phase einer Stromleitung;
- Fig. 2: einen Querschnitt durch das Gehäuse eines Koppelkondensators mit dem erfindungsgemäss integrierten Anschlusskabel.

In den Figuren sind gleiche Teile mit gleichen Bezugszeichen versehen.

### WEGE ZUR AUSFÜHRUNG DER ERFINDUNG

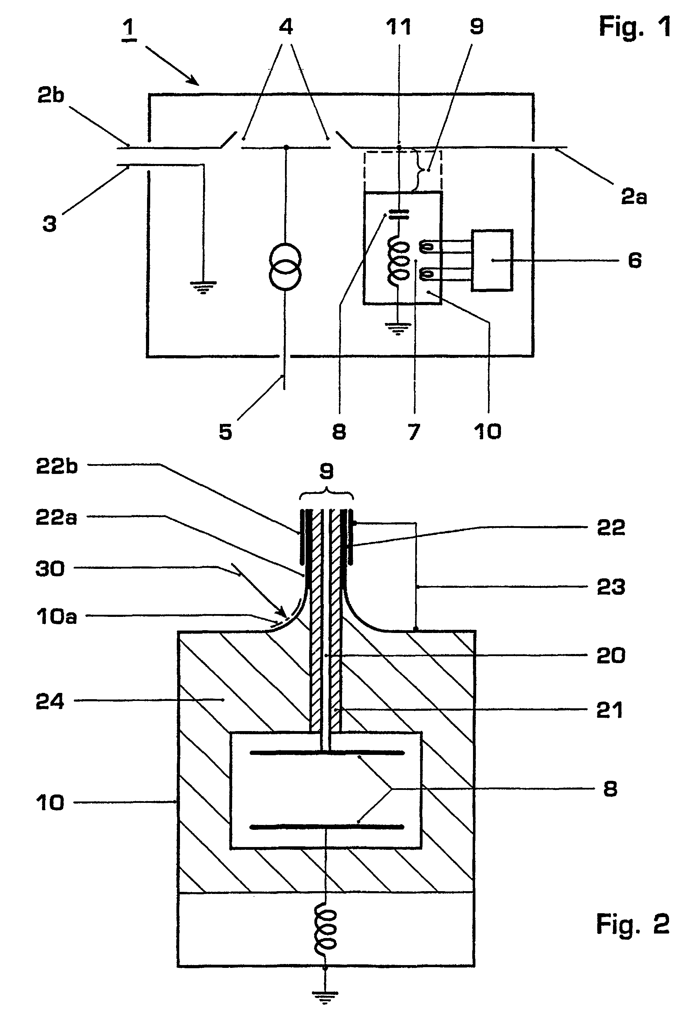

Die Erfindung hat eine Vorrichtung zur Signalein- und Signalauskopplung in Stromleitungen 2a, 2b eines Mittel- oder Hochspannungsnetzes zum Gegenstand. In Fig. 1 ist eine Energieverteilungsanlage 1, z. B. einer Schaltstation, Transformatorenstation o. ä. gezeigt, welcher über eine Freiluft- oder Überlandleitung 2a und/oder über ein Stromkabel 2b mit Abschirmung 3 elektrische Energie zugeführt und bedarfsweise über Schalter 4 weitergeleitet oder an Verbraucher 5 vermittelt wird. Es ist nun bestens bekannt, Signale einer Kommunikationselektronik 6 über einen der Impedanzanpassung dienenden Signaltransformator 7 einem Koppelkondensator 8 (KK) zuzuführen und kapazitiv über den KK 8 und ein Anschlusskabel 9 (AK) einem Phasenleiter der Überlandleitung 2a oder des Stromkabels 2b aufzumodulieren. Oft sind der KK 8 und der Signaltransformator 7 in einem gemeinsamen, geerdeten Gehäuse 10 untergebracht. Der Kontakt des AK 9 mit einer Leiterphase der Stromleitung erfolgt in einem Anschlusspunkt 11. Dieser kann beispielsweise auf einer Sammelschiene (Busbar) liegen oder auch als T-förmiges Verzweigungsstück ausgeführt sein.

Erfindungsgemäss sind das Anschlusskabel 9 (AK) und der Koppelkondensator 8 (KK) zu einer in Fig. 1 gestrichelt angedeuteten Einheit zusammengefasst. Dies bedeutet, dass der Leiter des AK 9 direkt und dauerhaft in das Gehäuse 10 geführt wird und nicht ausserhalb des letzteren auf eine spezielle Durchführung trifft. Diese Koppeleinheit kommt ohne teure Koaxialstecker aus, und als KK und AK können erprobte Standardkomponenten verwendet werden.

Zur Feldabsteuerung beim Übergang des AK 9 in das vorschriftsgemäss geerdete Gehäuse 10 wird eine spezielle Lösung gewählt. Das Gehäuse 10 ist nicht wie normalerweise üblich zur Aufnahme eines die eigentliche Durchführung stützenden Flansches vorbereitet, sondern selbst Teil der Feldsteuerung. Ausführliche Tests haben ergeben, dass für die hier interessierenden Spannungen auf die eingangs genannten zylindrischen Leiterflächen verzichtet werden kann. Statt dessen ist es für die Steuerung der elektrischen Felder ausreichend, die kabelseitige Gehäusewand wie in Fig. 2 im Schnitt gezeigt speziell zu verformen. Der Rand der zur Aufnahme des AK 9 vorgesehenen Öffnung in der Gehäusewand ist gegen aussen trichterförmig ausgebildet. Diese rotationssymmetrisch um das AK 9 vorgesehene Ausbildung 10a geht in den Leiterschirm 22 des AK 9 über. Erfindungsgemäss sind im Bereich der Kabeldurchführung keine weiteren leitenden Flächen zur Feldsteuerung vonnöten.

Der Leiter 20 und die Leiterisolation 21 werden ins Innere des Gehäuses 10 bis zum KK 8 geführt, wogegen der Leiterschirm 22 auf einer entsprechenden Länge entfernt wird. Der den KK 8 umgebende Raum 24 innerhalb des Gehäuses ist mit Isolationsmaterial (z.B. Polyurethan) vergossen und/oder ausgeschäumt.

Wesentlich an der Ausformung 10a ist, dass ein minimaler Krümmungsradius 30 nicht unterschritten wird, wodurch das Überschreiten einer kritischen Feldstärke vermieden werden kann. Es hat sich herausgestellt, dass für alle in Frage kommenden Kabeltypen dieser minimale Radius ungefähr 0.5 cm beträgt. Dabei ist natürlich bei kleineren Kabeldurchmessern ev. ein noch grösserer minimaler Radius zu beachten.

In Mittel- oder Hochspannungskabeln wie sie im vorliegenden Fall als Anschlusskabel verwendet wurden, umfasst die konzentrisch um den Leiter angeordnete Abschirmung 22 eine erste leitende Umhüllung 22a, welche vorzugsweise aus einem russgefüllten Polymer gefertigt ist, und darüber als zweite Schicht 22b ein metallisches Drahtgeflecht oder eine metallische Bandage bzw. ein sonstiger massiver Leiter. In diesem Falle wird die äussere Schicht 22b wie in Fig. 2 angedeutet über eine zusätzliche Erdverbindung 23 auf das Gehäuse 10 geführt. Der unmittelbare elektrische Kontakt zwischen der Kabelabschirmung und dem Kondensatorgehäuse 10a wird über die erste leitende Schicht 22a hergestellt.

In Fig. 1 ist eine Energieverteilungsanlage 1 dargestellt, bei welcher der Anschlusspunkt 11 des AK auf der Phase der Überlandleitung 2a liegt. Ausser bei Überlandleitungen 2a kann die Erfindung auch bei Stromkabeln 2b mit geerdeten Kabel- oder Phasenabschirmungen 3 angewendet werden. In den Figuren gezeigt ist nur eine erfindungsgemässe Einheit zur Kopplung an *eine* Phase der Stromleitung. Bevorzugt ist jedoch jede Phase (R,S,T) der Stromleitung 2a, 2b mit je einer Einkoppeleinheit verbunden.

Wichtige Vorteile der erfindungsgemässen Koppeleinheit aus AK und KK betreffen seine einfache Montage und die geometrische Flexibilität des Anschlusskabels. Durch die komplett gekapselte und berührungssichere Form der Koppeleinheit kann sie bei jeder bestehende Schalt- oder Transformatorenstation eingebaut werden. Die Erfindung eignet sich besonders gut für die digitale Signalübertragung über die Phasen von Hoch- und Mittelspannungsleitungen.

### BEZUGSZEICHENLISTE

- 1: Energieverteilungsanlage
- 2a, 2b: Stromleitung; Freiluftleitung, Stromkabel
- 3: Abschirmung des Stromkabels
- 4: Schalter
- 5: Verbraucher
- 6: Kommunikationselektronik
- 7: Signaltransformator
- 8: Koppelkondensator KK
- 9: Anschlusskabel AK
- 10, 10a: Gehäuse, Anformung
- 11: Anschlusspunkt P
- 20: Leiter des AK
- 21: Leiterisolation des AK
- 22, 22a, 22b: Leiterschirm, innere und äussere Schicht
- 23: Erdverbindung
- 24: Isolation
- 30: Krümmungsradius

## Patentansprüche

1. Vorrichtung zur kapazitiven Einkopplung von Kommunikationssignalen in einen Phasenleiter einer Stromleitung (2a, 2b) eines Mittel- oder Hochspannungsnetzes, umfassend
- a) einen Koppelkondensator (8) in einem geerdeten Gehäuse (10) und
- b) ein Anschlusskabel (9) mit einem Leiter (20) und einem Leiterschirm (22), welcher Leiter (20) an einen Punkt (11) eines Phasenleiters der Stromleitung (2a, 2b) anschliesst,
**dadurch gekennzeichnet:, dass**
- c) der Leiter (20) des Anschlusskabels (9) ins Innere des Gehäuses (10) geführt und mit dem Koppelkondensator (8) verbunden ist, dass
- d) eine leitende Verbindung zwischen dem Leiterschirm (22) des Anschlusskabels (9) und dem Gehäuse (10) besteht und dass
- e) eine Wand des Gehäuses (10), durch welche das Anschlusskabel (9) geführt ist, eine abgerundete Ausformung (10a) aufweist.

2. Vorrichtung nach Anspruch 1, **dadurch gekennzeichnet, dass**
- die abgerundete Ausformung (10a) sich nach aussen hin stetig verengt.

3. Vorrichtung nach Anspruch 2, **dadurch gekennzeichnet, dass**
- die Ausformung (10a) im wesentlichen rotationssymmetrisch um das Anschlusskabel (9) ausgebildet ist.

4. Vorrichtung nach Anspruch 2 oder 3, **dadurch gekennzeichnet, dass**
- in jedem Punkt der Ausformung (10a) der Krümmungsradius (30) in einer den Leiter (20) enthaltenden Ebene einen minimalen Krümmungsradius von 0.5 cm nicht unterschreitet.

5. Vorrichtung nach einem der vorangehenden Ansprüche, **dadurch gekennzeichnet, dass**
- der Innenraum (24) des Gehäuses (10) mit einem elektrisch isolierenden Material vergossen und/oder ausgeschäumt ist.

6. Vorrichtung nach einem der vorangehenden Ansprüche, **dadurch gekennzeichnet, dass**
- der Leiterschirm (22) des Anschlusskabels (9) zwei leitende Schichten (22a, 22b) umfasst, wobei die äussere Schicht (22b) über eine Erdverbindung (23) mit dem Gehäuse (10) in Kontakt steht.

7. Vorrichtung nach einem der vorangehenden Ansprüche, **dadurch gekennzeichnet, dass**
- der Koppelkondensator (8) ein Trockenkondensator, vorzugsweise ein Folien- oder Keramikkondensator ist.

8. Vorrichtung nach einem der vorangehenden Ansprüche, **dadurch gekennzeichnet, dass**
- ein Signaltransformator (7) ebenfalls im Gehäuse (10) untergebracht ist.

9. Vorrichtung nach einem der vorangehenden Ansprüche, **dadurch gekennzeichnet, dass**
- die Einheit aus Koppelkondensator (8) und Anschlusskabel (9) im Innern einer Energieverteilungsanlage (1) angeordnet ist.

## Claims

1. Apparatus for capacitive injection of communication signals into a phase conductor of an electrical power line (2a, 2b) of a medium-voltage or high-voltage network, comprising
- a) a coupling capacitor (8) in an earthed housing (10) and
- b) a connecting cable (9) having a conductor (20) and a conductor screen (22), which conductor (20) is connected to a point (11) on a phase conductor of the electrical power line (2a, 2b), **characterized in that**
- c) the conductor (20) of the connecting cable (9) is routed into the interior of the housing (10) and is connected to the coupling capacitor (8), **in that**
- d) a conducting connection exists between the conductor screen (22) of the connecting cable (9) and the housing (10) and **in that**
- e) one wall of the housing (10), through which the connecting cable is routed, has a rounded shaped portion (10a).

2. Apparatus according to Claim 1, **characterized in that**
- the rounded shaped portion (10a) tapers continuously towards the outside.

3. Apparatus according to Claim 2, **characterized in that**
- the shaped portion (10a) is formed essentially rotationally symmetrically around the connecting cable (9).

4. Apparatus according to Claim 2 or 3, **characterized in that**
- the radius of curvature (30) at each point in the shaped portion (10a) and in a plane containing the conductor (20) is not less than a minimum radius of curvature of 0.5 cm.

5. Apparatus according to one of the preceding claims, **characterized in that**
- the interior (24) of the housing (10) is potted and/or foam-filled with an electrically insulating material.

6. Apparatus according to one of the preceding claims, **characterized in that**
- the conductor screen (22) of the connecting cable (9) comprises two conductive layers (22a, 22b), wherein the outer layer (22b) is in contact with the housing (10) via an earth connection (23).

7. Apparatus according to one of the preceding claims, **characterized in that**
- the coupling capacitor (8) is a dry capacitor, preferably a foil or ceramic capacitor.

8. Apparatus according to one of the preceding claims, **characterized in that**
- a signal transformer (7) is likewise accommodated in the housing (10).

9. Apparatus according to one of the preceding claims, **characterized in that**
- the unit comprising the coupling capacitor (8) and the connecting cable (9) is arranged in the interior of a power distribution installation (1).

## Revendications

1. Dispositif d'injection capacitif de signaux de communication dans un conducteur de phase d'une ligne de courant (2a,2b) d'un réseau à tension moyenne ou à haute tension, comprenant :
a) un condensateur de liaison (8) dans un boîtier mis à la terre (10), et
b) un câble de connexion (9) avec un conducteur (20) et un blindage de conducteur (22), ledit conducteur (20) se connectant en un point (11) d'un conducteur de phase de la ligne de courant (2a,2b),
**caractérisé en ce que** :
c) le conducteur (20) du câble de connexion (9) est guidé à l'intérieur du boîtier (10) et est connecté au condensateur de liaison (8),
d) il y a une connexion conductrice entre le blindage de conducteur (22) du câble de connexion (9) et le boîtier (10), et
e) une paroi du boîtier (10), à travers laquelle le câble de connexion (9) est guidé, présente une déformation arrondie (10a).

2. Dispositif selon la revendication 1, **caractérisé en ce que** :
- la déformation arrondie (10a) se rétrécit vers l'extérieur en permanence.

3. Dispositif selon la revendication 2, **caractérisé en ce que** :
- la déformation (10a) est conformée en substance avec une symétrie de rotation autour du câble de connexion (9).

4. Dispositif selon la revendication 2 ou 3,
**caractérisé en ce que** :
- en chaque point de la déformation (10a), le rayon de courbure (30) dans un plan contenant le conducteur (20), on ne passe pas en dessous d'un rayon de courbure minimal de 0,5 cm.

5. Dispositif selon l'une quelconque des revendications précédentes, **caractérisé en ce que** :
- l'espace interne (24) du boîtier (10) est rempli d'un matériau isolant électrique par coulée et/ou expansion.

6. Dispositif selon l'une quelconque des revendications précédentes, caractérisé en que :
- le blindage de conducteur (22) du câble de connexion (9) comprend deux couches conductrices (22a,22b), la couche externe (22b) venant en contact avec le boîtier (10) via une connexion de terre (23).

7. Dispositif selon l'une quelconque des revendications précédentes, **caractérisé en ce que** :
- le condensateur de liaison (8) est un condensateur sec, de préférence un condensateur en feuille ou un condensateur céramique.

8. Dispositif selon l'une quelconque des revendications précédentes, **caractérisé en ce que** :
- un transformateur de signaux (7) est également logé dans le boîtier (10).

9. Dispositif selon l'une quelconque des revendications précédentes, **caractérisé en ce que** :
- l'unité formée du condensateur de liaison (8) et du câble de connexion (9) est agencée à l'intérieur d'une installation de distribution d'énergie (1).
